# DEMANDE DE BREVET EUROPEEN

(11) **EP 4 852 281 A1**
(43) Date de publication de la demande: **09.12.2026**
(21) Numéro de dépôt: 26173774.6
(22) Date de dépôt: 21.04.2026
(51) Int. Cl.: H02K 1/278, H02K 1/28, H02K 15/03

(54) **ROTOR POUR UN MOTEUR ÉLECTRIQUE ET PROCÉDÉ DE FABRICATION D'UN TEL ROTOR**

(30) Priorité: 02.06.2025 FR 2505911
(71) Demandeur: VALEO EMBRAYAGES, 80009 Amiens (FR)
(72) Inventeur: BESNARD, Mickael, 95892 CERGY PONTOISE (FR); RIBERA, Frédéric, 95892 CERGY PONTOISE (FR); BASKARAN, Sachidhanandam, 95892 CERGY PONTOISE (FR)
(74) Mandataire: Valeo Powertrain Systems

(57) **Abrégé**

L'invention concerne un rotor (1) pour moteur électrique comprenant un corps de base (10) formé par un empilement de tôles ou groupes de tôles (14₁ - 14₈) s'étendant selon un axe X. Le corps de base (10) comporte à sa périphérie des surfaces d'appui (11) recevant des aimants permanents (3), maintenus par un manchon (20) surmoulé. Chaque tôle ou groupe de tôles comprend à sa périphérie, simultanément, une pluralité d'excroissances (12) assurant le maintien radial mécanique des aimants (3) et une pluralité de canaux (13) pour l'ancrage structurel du manchon (20). L'empilement des tôles avec un décalage angulaire permet d'aligner axialement et alternativement les excroissances (12) et les canaux (13) sur toute la longueur axiale du rotor (1), permettant ainsi de fixer les aimants (3) avant l'opération de surmoulage.

## Description

L'invention concerne un rotor pour un moteur électrique.

En particulier le rotor est de type SMPM qui signifie en anglais *« Surface Mounted Permanent Magnet »* ou rotor à aimants permanents montés en surface.

Ce type de rotor est utilisé dans les machines électriques, notamment les moteurs synchrones. Sa principale caractéristique est que les aimants permanents sont fixés à la surface du rotor, plutôt que d'être insérés dans des encoches fermées à l'intérieur du rotor.

Ce type de rotor a pour avantage une fabrication simplifiée, un flux de fuite du champ magnétique réduit, ce qui améliore l'efficacité, et une inertie réduite, ce qui permet une meilleure dynamique du moteur.

Ce type de rotor présente des inconvénients tels que des risques de détachement des aimants permanents à haute vitesse sous l'effet de la force centrifuge mais aussi une exposition accrue des aimants permanents aux contraintes mécaniques et thermiques du moteur.

Il est connu du document EP 2 556 582 A1 un rotor du type précité. Le rotor décrit dans ce document présente l'inconvénient d'être complexe à réaliser car il nécessite un outil de maintien des aimants permanents sur le corps de base lors de l'insertion du manchon et une opération additionnelle de surmoulage pour maintenir axialement les aimants permanents.

Il est ainsi nécessaire de simplifier la conception et la fabrication d'un tel rotor.

Ainsi l'invention propose un rotor pour un moteur électrique, le rotor comprend un corps de base formé par un empilement de tôles ou de groupes de tôles s'étendant selon un axe X, le corps de base comprend à sa périphérie une pluralité de surfaces d'appui sur lesquelles sont appliqués une pluralité d'aimants permanents, le corps de base est partiellement entouré par un manchon, notamment un manchon surmoulé, qui présente des parois axiales formant avec les surfaces d'appui une pluralité de chambres dans lesquelles sont disposés les aimants permanents. Selon l'invention chaque tôle ou groupe de tôles de l'empilement formant le corps de base comprend à sa périphérie une pluralité d'excroissances et une pluralité de canaux, les tôles ou groupes de tôles étant empilées les unes sur les autres de manière à aligner axialement et alternativement les excroissances et les canaux.

De manière particulièrement avantageuse, l'invention permet une simplification majeure du processus industriel. Chaque tôle porte ainsi, sur son propre périmètre, la double fonctionnalité de maintien radial mécanique des aimants permanents via les excroissances et de zone d'ancrage structurel du manchon via les canaux.

L'architecture fonctionnelle finale du rotor, caractérisée par l'alternance axiale entre ces deux fonctions sur toute la longueur du corps de base, est alors générée exclusivement par l'application d'un décalage angulaire relatif entre ces tôles ou groupes de tôles lors de l'opération d'empilement. Cette standardisation totale du noyau de rotor permet non seulement une réduction des coûts logistiques par la gestion d'une référence unique de pièce, mais garantit également une fiabilité accrue de l'assemblage automatisé en éliminant tout risque d'erreur de séquencement ou d'inversion entre des tôles qui auraient des formes distinctes.

Cette conception permet également de maintenir les aimants permanents sur le corps de base grâce aux excroissances sans utiliser d'outil supplémentaires ni de colle tout en garantissant une bonne accroche du manchon grâce aux canaux lors de l'opération de surmoulage de ce dernier sur le corps de base.

Le surmoulage du manchon sur le corps de base garantit la fixation des aimants permanents dans toutes les conditions et évite les pertes due à la dilatation thermique à haute température.

L'alignement axial et alternatif des excroissances et des canaux signifie une alternance entre les excroissances et les canaux dans le sens axial et sur toute la longueur du corps de base, c'est-à-dire qu'une excroissance succède axialement à un canal ou inversement. Autrement dit, un canal se trouve axialement entre deux excroissances ou inversement.

Un décalage angulaire des tôles ou des groupes de tôles lors de leur empilement permet d'obtenir cet alignement axial et alternatif des excroissances et des canaux.

Selon une caractéristique de l'invention, les excroissances ont une forme en contre dépouille permettant une insertion axiale des aimants permanents sur les surfaces d'appui et un maintien radial des aimants permanents contre les surfaces d'appui. Les formes en contre dépouille sont créées lors de la découpe des tôles. De manière alternative, ces formes peuvent être des éléments additionnels ajoutés aux tôles.

Selon une autre caractéristique de l'invention, les canaux ont une forme en trou de serrure permettant à des éléments d'ancrage issus des parois axiales du manchon de pénétrer dans ces trous de serrure. Les formes en trou de serrure sont créées lors de la découpe des tôles.

Selon l'invention, les tôles ou groupes de tôles sont identiques. Cela permet une standardisation des éléments constitutifs du corps de base. Cela signifie également que les tôles formant un groupe de tôles sont identiques.

Selon une caractéristique additionnelle de l'invention, chaque tôle ou groupe de tôles comprend un nombre d'excroissances et de canaux répartis angulairement dans le sens circonférentiel, le nombre total d'excroissances et de canaux correspond au nombre de surfaces d'appui du corps de base. Les excroissances et les canaux peuvent être disposés alternativement dans le sens circonférentiel ou bien, de manière alternative, former des groupes d'excroissances et des groupes de canaux disposés alternativement dans le sens circonférentiel.

Selon une autre caractéristique de l'invention, le manchon comprend un disque à chaque extrémité axiale permettant un maintien axial des aimants permanents sur le corps de base. De préférence, les disques sont issus de matière avec le manchon. De manière alternative, les disques sont des éléments séparés et rapportés sur le manchon par un moyen de fixation.

Selon l'invention, les surfaces d'appui du corps de base sont plates.

Selon l'invention, les aimants permanents ont une forme de trapèze isocèle dont la plus grande des surfaces est au contact des surfaces d'appui du corps de base.

Selon l'invention, les parois axiales du manchon recouvrent en partie les aimants permanents.

L'invention concerne également un procédé de fabrication d'un rotor précité, comprenant les étapes suivantes : (i) fournir le corps de base, (ii) insérer axialement les aimants permanents sur le corps de base, surmouler le manchon sur le corps de base et en partie sur les aimants permanents.

D'autres caractéristiques et avantages de l'invention ressortiront à la lecture qui suit d'un exemple de réalisation détaillé, en référence aux figures annexées :
la [Figure 1] représente une vue en perspective d'un rotor selon l'invention monté sur un arbre ;
la [Figure 2] représente une vue en perspective du corps de base ;
la [Figure 3] représente une vue en perspective du corps de base avec les aimants permanent ;
la [Figure 4] représente une vue en perspective du manchon.

Il est à noter que les figures divulguent l'invention d'une manière suffisamment détaillée pour sa mise en œuvre, lesdites figures aidant à mieux définir l'invention au besoin. L'invention ne devrait cependant pas être limitée au mode de réalisation divulgué dans la description.

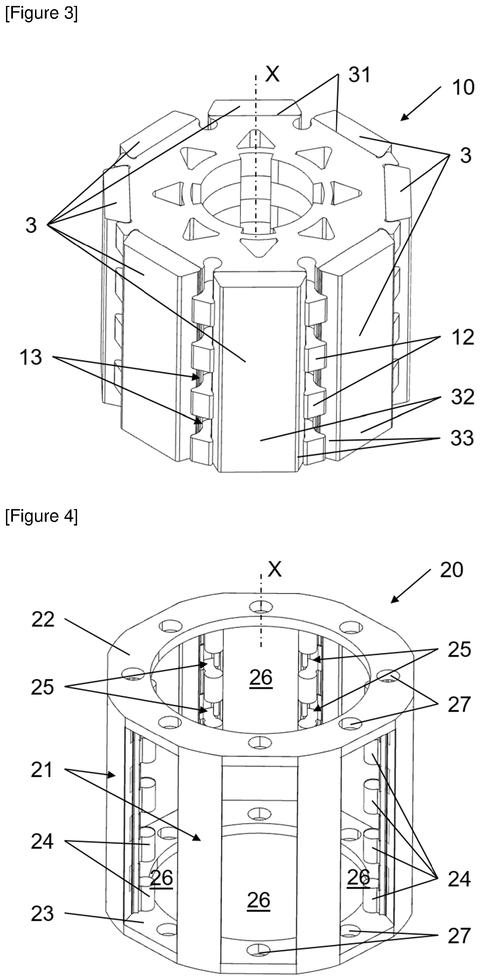

La [Figure 3] montre un rotor 1 apte à coopérer avec un stator afin de former un moteur électrique. Le rotor 1 est monté sur un arbre 2 afin de pouvoir être mis en rotation autour d'un axe X. Dans la description, la direction dite « axiale » est définie comme étant parallèle ou confondue à l'axe X et la direction dite « radiale » est définie comme étant perpendiculaire à l'axe X.

Le rotor 1 présente un corps de base 10 lié en rotation à l'arbre de rotation 2. Des aimants permanents 3 sont disposés à la périphérie du corps de base 10. Les aimants permanents 3 sont maintenus radialement et axialement sur le corps de base 10 à la fois par le corps de base 10 et par un manchon 20. Le maintien de ces aimants permanents 3 sera décrit plus en détail en référence aux figures suivantes.

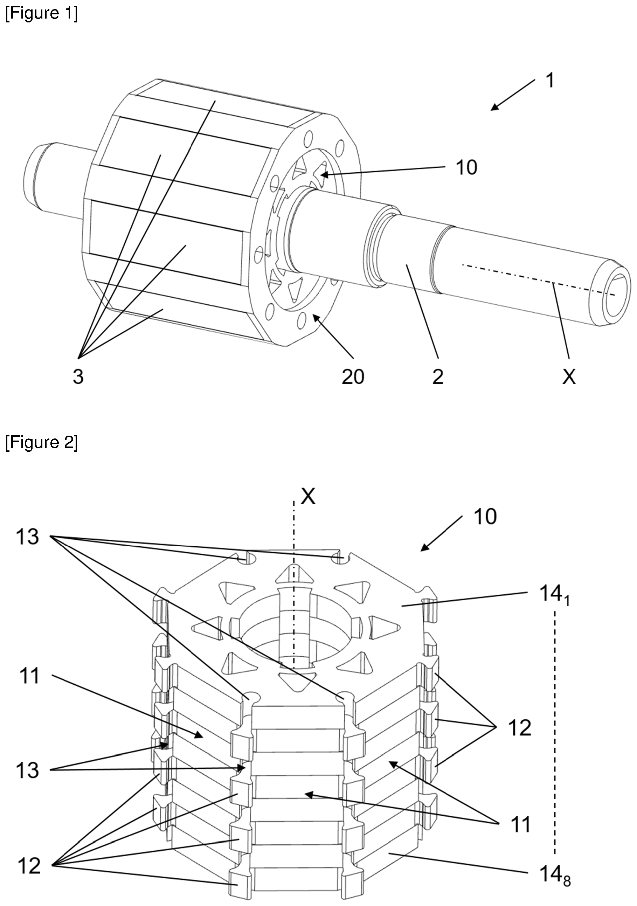

La [Figure 2] montre le corps de base 10 formé par un empilement de tôles ou de groupes de tôles 14₁ - 14₈ s'étendant dans une direction selon l'axe X. Ces tôles ou groupes de tôles 14₁ - 14₈ sont produites à partir de tôles d'aciers électriques qui sont découpées puis empilées pour former un noyau de rotor.

Dans le présent mode de réalisation, un groupe de tôles 14₁ - 14₈ est constitué de cinq tôles identiques et le corps de base 10 est constitué de huit groupes de tôles 14₁ - 14₈ ce qui représente un empilement de quarante tôles.

Le corps de base 10 comprend à sa périphérie une pluralité de surfaces d'appui 11 destinées à recevoir une pluralité d'aimants permanents 3, voir notamment la [Figure 3].

Chaque tôle ou groupe de tôles 14₁ - 14₈ de l'empilement formant le corps de base 10 comprend à sa périphérie une pluralité d'excroissances 12 et une pluralité de canaux 13. On entend par canal un renfoncement dans la tôle.

Les tôles ou groupes de tôles 14₁ - 14₈ sont empilées les unes sur les autres de manière à aligner axialement et alternativement les excroissances 12 et les canaux 13. Ainsi, chaque surface d'appui 11 est délimitée par deux alignements axiaux d'excroissances 12 et de canaux 13 qui se trouvent de part et d'autre de la surface d'appui 11. Dit autrement, un alignement axial d'excroissances 12 et de canaux 13 sépare deux surfaces d'appui 11 l'une de l'autre.

Dans le présent mode de réalisation, le corps de base 10 comprend huit surfaces d'appui 11 et huit alignements axiaux d'excroissances 12 et de canaux 13 réparties angulairement à la périphérie. Bien évidemment, ce nombre peut être adapté en fonction des critères nécessaire à la conception du moteur électrique.

Chaque tôle ou groupe de tôles 14₁ - 14₈ comprend une alternance de deux excroissances 12 et deux canaux 13 dans le sens circonférentiel. Une alternance d'une excroissance 12 et d'un canal 13 dans le sens circonférentiel est également possible.

Les excroissances 12 ont une forme en contre dépouille permettant une insertion axiale des aimants permanents 3 sur les surfaces d'appui 11 et un maintien radial des aimants permanents 3 contre les surfaces d'appui 11.

Les canaux 13 ont une forme en trou de serrure permettant une accroche du manchon 20 sur le corps de base lors du surmoulage.

Pour des raisons de standardisation et de fabrication, toutes les tôles ou groupes de tôles 14₁ - 14₈ sont identiques. Un décalage angulaire des tôles ou des groupes de tôles lors de l'empilement permet d'obtenir l'alignement axial et alternatif des excroissances 12 et des canaux 13.

Les surfaces d'appui 11 du corps de base sont plates afin d'être adaptées aux surfaces planes des aimants permanents 3.

La [Figure 3] montre le corps de base 10 et les aimants permanents 3 montés sur les surfaces d'appui 11.

Les aimants permanents 3 ont une forme de trapèze isocèle dont la plus grande des surfaces aussi appelée surface interne 31 est au contact des surfaces d'appui 11 du corps de base 10. La surface externe 32, c'est-à-dire la surface opposée à la surface interne 31 dans le sens radial est dépourvue de matière du manchon 20. Deux flancs 33 font le lien entre la surface interne 31 et la surface externe 32, ces deux flancs 33 sont recouverts de matière du manchon 20.

Les excroissances 12 en forme de contre dépouille permettent de retenir les aimants permanents 3 contre les surfaces d'appui 11, il n'est ainsi pas nécessaire de prévoir de moyens de maintien temporaire des aimants permanents 3 contre les surfaces d'appui 11. Les excroissances 12 sont en partie complémentaires à la forme des flancs 33 des aimants permanents 3 afin de réaliser cette fonction d'auto-maintien.

La [Figure 4] montre le manchon 20 entourant partiellement le corps de base 10 avec les aimants permanents 3. Ce manchon 20 est une pièce en plastique obtenue par une opération de surmoulage.

Le manchon 20 présente des parois axiales 21 formant avec les surfaces d'appui 11 du corps de base 10 une pluralité de chambres 26 dans lesquelles sont disposés les aimants permanents 3.

Le manchon 20 comprend un disque 22, 23 à chaque extrémité axiale permettant un maintien axial des aimants permanents 3 sur le corps de base 10. Sur ces disques 22, 23 se trouvent une pluralité d'ouvertures circulaires 27 servant au positionnement et au maintien du corps de base 10 dans l'outil de surmoulage.

Les parois axiales 21 du manchon 20 recouvrent en partie les aimants permanents 3, notamment les flancs 33. Une grande partie de la surface externe 32 des aimants permanents 3, c'est-à-dire la surface opposée à la surface interne 32, n'est pas recouverte par le manchon 20.

Le manchon 20 est solidarisé mécaniquement au corps de base 10 par des éléments d'ancrage 24 qui s'étendent depuis ses parois axiales 21 pour venir combler la forme en trou de serrure des canaux 13. Par l'effet de l'opération de surmoulage, la géométrie interne des parois axiales 21 du manchon 20 constitue ainsi une empreinte négative parfaite de l'alignement axial alternant les excroissances 12 et les canaux 13.

Le rotor 1 est fabriqué selon les étapes suivantes : (i) fournir le corps de base 10, (ii) insérer axialement les aimants permanents 3 sur le corps de base, (iii) surmouler le manchon 20 sur le corps de base 10 et en partie sur les aimants permanents 3.

Les aimants permanents 3 peuvent être magnétisés avant ou après l'opération de surmoulage du manchon 20 sur le corps de base 10.

Bien que l'invention ait été décrite en liaison avec un mode de réalisation particulier, il est bien évident qu'elle n'y est nullement limitée et qu'elle comprend tous les équivalents techniques des moyens décrits.

Dans les revendications, les symboles de référence entre parenthèses ne doivent pas être interprétés comme une limitation de la revendication.

## Revendications

1. Rotor (1) pour un moteur électrique, le rotor (1) comprend un corps de base (10) formé par un empilement de tôles ou de groupes de tôles (14₁ - 14₈) s'étendant selon un axe X, le corps de base (10) comprend à sa périphérie une pluralité de surfaces d'appui (11) sur lesquelles sont appliqués une pluralité d'aimants permanents (3), le corps de base (10) est partiellement entouré par un manchon (20), notamment un manchon (20) surmoulé, qui présente des parois axiales (21) formant avec les surfaces d'appui (11) une pluralité de chambres (26) dans lesquelles sont disposés les aimants permanents (3), **caractérisé en ce que** chaque tôle ou groupe de tôles (14₁ - 14₈) de l'empilement formant le corps de base (10) comprend à sa périphérie une pluralité d'excroissances (12) et une pluralité de canaux (13), les tôles ou groupes de tôles (14₁ - 14₈) étant empilées les unes sur les autres de manière à aligner axialement et alternativement les excroissances (12) et les canaux (13).

2. Rotor (1) selon la revendication 1, **caractérisé en ce que** les excroissances (12) ont une forme en contre dépouille permettant une insertion axiale des aimants permanents (3) sur les surfaces d'appui (11) et un maintien radial des aimants permanents (3) contre les surfaces d'appui (11).

3. Rotor (1) selon la revendication 1 ou 2, **caractérisé en ce que** les canaux (13) ont une forme en trou de serrure permettant à des éléments d'ancrage (24) issus des parois axiales (21) du manchon (20) de pénétrer dans ces trous de serrure.

4. Rotor (1) selon l'une des revendications précédentes, **caractérisé en ce que** les tôles ou groupes de tôles (14₁ - 14₈) sont identiques.

5. Rotor (1) selon l'une des revendications précédentes, **caractérisé en ce que** chaque tôle ou groupe de tôles (14₁ - 14₈) comprend un nombre d'excroissances (12) et de canaux (13) répartis angulairement dans le sens circonférentiel, le nombre total d'excroissances (12) et de canaux (13) correspond au nombre de surfaces d'appui (11) du corps de base (10).

6. Rotor (1) selon l'une des revendications précédentes, **caractérisé en ce que** le manchon (20) comprend un disque (22, 23) à chaque extrémité axiale permettant un maintien axial des aimants permanents (3) sur le corps de base (10).

7. Rotor (1) selon l'une des revendications précédentes, **caractérisé en ce que** les surfaces d'appui (11) du corps de base sont plates.

8. Rotor (1) selon l'une des revendications précédentes, **caractérisé en ce que** les aimants permanents (3) ont une forme de trapèze isocèle dont la plus grande des surfaces est au contact des surfaces d'appui (11) du corps de base (10).

9. Rotor (1) selon l'une des revendications précédentes, **caractérisé en ce que** les parois axiales (21) du manchon (20) recouvrent en partie les aimants permanents (3).

10. Procédé de fabrication d'un rotor (1) selon l'une des revendications précédentes, comprenant les étapes suivantes : (i) fournir le corps de base (10), (ii) insérer axialement les aimants permanents (3) sur le corps de base, (iii) surmouler le manchon (20) sur le corps de base (10) et en partie sur les aimants permanents (3).
